# EUROPEAN PATENT APPLICATION

(11) **EP 4 491 586 A1**
(43) Date of publication of application: **15.01.2025**
(21) Application number: 22930500.8
(22) Date of filing: 06.07.2022
(51) Int. Cl.: C02F 3/30, C02F 101/16, C02F 101/38

(54) **MBBR ENHANCED AOA AND AAO DUAL-MODE OPERATION METHOD BASED ON CIRCULAR FLOW**

(30) Priority: 11.03.2022 CN 202210238600
(71) Applicant: Qingdao Spring Water Treatment Co. Ltd., Qingdao, Shandong 266599 (CN)
(72) Inventor: ZHOU, Jiazhong, Qingdao, Shandong 266599 (CN); WU, Di, Qingdao, Shandong 266599 (CN); HAN, Wenjie, Qingdao, Shandong 266599 (CN); YANG, Zhongqi, Qingdao, Shandong 266599 (CN); SONG, Meiqin, Qingdao, Shandong 266599 (CN); MEN, Yanhui, Qingdao, Shandong 266599 (CN); JI, Genghao, Qingdao, Shandong 266599 (CN)
(74) Representative: JD&P Patent Attorneys Joanna Dargiewicz & Partners
(86) International application number: PCT/CN2022/104109
(87) International publication number: WO 2023/168871

(57) **Abstract**

The present disclosure discloses a MBBR enhanced AOA and AAO dual mode operation method based on circulating flow, which relates to the field of water treatment technology. When the influent C/N of the sewage to be treated is ≥ 5 or C/N is < 2, the system adopts AAO operation mode. The operation method is as follows: the sewage to be treated and returned sludge enter the first anaerobic zone - fourth anaerobic zone - third anaerobic zone
- second anaerobic zone - first anoxic zone - first aerobic zone - second anoxic zone - third anoxic zone - second aerobic zone through the inlet channel. When 2 ≤ the influent C/N of the sewage to be treated < 5, the system adopts AOA operation mode, the sewage to be treated and returned sludge together enter the second anaerobic zone - third anaerobic zone
- fourth anaerobic zone - first anaerobic zone - first aerobic zone - first anoxic zone - second anoxic zone - third anoxic zone - second aerobic zone. The present disclosure can achieve two operating modes under the same system pool arrangement, and can achieve stable, efficient, and economical denitrification.

## Description

### TECHNICAL FIELD

The present disclosure relates to the field of water treatment technology, in particular to a MBBR enhanced AOA and AAO dual mode operation method based on circulating flow.

### BACKGROUND

With the continuous upgrading of sewage discharge standards, the requirements for nitrogen and phosphorus removal performance of sewage treatment biochemical systems in the sewage treatment industry are constantly increasing. The AAO process (Anaerobic-Anoxic-Oxic), also known as the Anaerobic-Anoxic-Oxic process, is a common biological process for nitrogen and phosphorus removal widely used in secondary sewage treatment. In the traditional AAO process, the anaerobic stage achieves anaerobic biological phosphorus release and synthesis of PHA, the anaerobic stage achieves denitrification for nitrogen removal, and the aerobic stage completes the nitrification process and phosphorus excessive uptake process. However, in practical application, the AAO process has the following disadvantages: Firstly, the PHA synthesized during the anaerobic phosphorus release process is heavily consumed in the anaerobic stage, which has a negative impact on the phosphorus uptake process of phosphate accumulating organisms in aerobic section. Secondly, a large amount of reflux of DO carried by the nitrifying liquid, causes severe waste of carbon source in the raw water, thus, sewage treatment processes operated by AAO process often require the addition of carbon source in the anoxic zone to ensure that the effluent TN meets the standard. Finally, due to a more fragile nitrification effect of conventional sewage treatment systems, the tank volume ratio of aerobic tank to anoxic tank in AAO process is often greater than 1. Under certain conditions of total tank volume, a larger aerobic tank volume leads to insufficient hydraulic retention time (HRT) of the anoxic tank, incomplete denitrification effect, and a further increase in the addition dosage of carbon source.

The AOA process, also known as anaerobic-anoxic-oxic process, avoids the problem of carbon source waste caused by a large amount of reflux by placing the aerobic zone in front and the anaerobic zone behind. At the same time, it utilizes a lower tank volume ratio of aerobic/anaerobic, shortening the aerobic retention time and reducing the consumption of internal carbon sources in the aerobic zone on the one hand. On the other hand, it also ensures sufficient denitrification tank volume. When dealing with insufficient influent C/N, the anaerobic tank utilizes the PHA synthesized during the anaerobic stage to ensure high nitrogen removal efficiency through endogenous denitrification and high biological phosphorus removal rate through denitrification, achieving "one carbon dual use". However, due to the fact that the aerobic zone is located in front of the anoxic zone, on the one hand, it is necessary to minimize the loss of carbon sources in the aerobic zone as much as possible, and on the other hand, it is also necessary to ensure the nitrification effect. Therefore, the core of the AOA process is to adopt an enhanced nitrification process in the aerobic zone, in order to minimize the nitrification tank volume as much as possible.

Application number 201610816170.6 discloses a single stage AOA-SBBR enhanced endogenous denitrification for sewage deep nitrogen and phosphorus removal device and method. The sewage enters the system through an inlet pump, and the anoxic zone can be placed behind while the biomass of nitrifying bacteria is ensuring adequate by adding nitrifying bacterial fillers in the aerobic zone. By this way, it solves the competition between denitrifying bacteria, phosphate-accumulating organisms, and glycogen-accumulating organisms on substrates, and can save energy and fully utilize carbon sources, so as to realize synchronous deep nitrogen and phosphorus removal of sewage. Application number 201610541851.6 discloses a device and method for continuous flow AOA deep nitrogen and phosphorus removal of urban domestic sewage, which enhances the nitrification effect of the system by adding biological fillers in aerobic areas. Application number 202110399525.7 discloses a deep nitrogen and phosphorus removal system using AOA sludge film mixing for urban domestic sewage, by adding fillers in aerobic zone and anoxic zone, the nitrification and endogenous denitrification effects of the system are enhanced. The existing technologies mentioned above all use the addition of fillers to enhance the nitrification effect in the aerobic zone. However, in terms of application effectiveness, it affirms the improvement of nitrification effect by adding fillers, but there is no quantitative description of the nitrification load borne by the fillers. In addition, there are two ways to add fillers in the aerobic zone. One is a fixed bed, and the actual application results show that it has high requirements for control, on the one hand, it requires complex pre-treatment, and on the other hand, it requires frequent backwashing, which increases investment and operating costs. Another type is fluidized bed, such as moving bed biofilm reactor (MBBR), the actual application results show that its treatment effect is closely related to factors such as fluidization effect and biofilm thickness, thus, it has high requirements for engineering design and operation control, which increases the difficulty of design and control. It can be seen that further research and development are needed on the process of adding fillers to the aerobic zone to reduce its operational difficulty, investment and operation costs.

In fact, as different biological phases, fillers and activated sludge have different principles and effects when exerting nitrification effects. Due to its thickness, biofilm shows lower mass and oxygen transfer efficiency than those of activated sludge, but at the same time, the thickness of biofilm also brings convenience for stronger impact resistance. When there is impact in the influent, the mass transfer depth of biofilm increases, and its nitrification load can be increased by increasing DO. Further research is needed on the nitrification characteristics of biofilms to deepen the relationship between nitrification load and control parameters from a control perspective. In addition, current technologies related to AOA process all adopt a single operating mode, nevertheless, AAO and AOA processes can both show their own advantages when dealing with different influent C/N in reality,. In practical applications, on the one hand, influent C/N is not always the same, although the same sewage plant shows significant fluctuations in the treatment efficiency of the system, affected by temperature in different seasons. Therefore, applying a single AAO or AOA process to treat actual sewage may not be able to stably exert its advantages. Further research and development of the process is needed from the perspective of TN removal to improve operational flexibility.

In summary, the existing technologies related to AOA process have contradictions between operational effectiveness and design and control difficulties, uncertainty in nitrification effect and control parameters, and uncertainty in denitrification effect and process flow. Only by solving these contradictions can stable, efficient, and economic denitrification be achieved.

### SUMMARY

The objective of the present disclosure is to provide a MBBR enhanced AOA and AAO dual mode operation method based on circulating flow, which can achieve stable, efficient, and economical nitrogen removal by reasonably arranging the system to achieve two operation modes under the same system pool arrangement.

In order to achieve the above objective, the present disclosure adopts the following technical solutions:
A MBBR enhanced AOA and AAO dual mode operation method based on circulating flow, including the following steps:
a. Build an operating system,

The operating system includes a reaction tank, which is separated by a partition wall into two sets of reaction tanks arranged in parallel, namely the first reaction tank and the second reaction tank. In the first reaction tank, a pre anaerobic and anoxic zone and a first aerobic zone are sequentially arranged, and the second reaction tank serves as the first anoxic zone. A third reaction tank is further arranged on the right side of the first and second reaction tanks, and the length of the third reaction tank is the sum of the widths of the first reaction tank and the second reaction tank. The third reaction tank includes a second anoxic zone located at the top and a post-multifunctional zone located at the bottom, respectively. The post-multifunctional zone includes a third anoxic zone and a second aerobic zone, and the second anoxic zone can be interconnected to both the first aerobic zone and first anoxic zone.

The first aerobic zone is designed according to 30-40% of the designed nitrification tank volume. The tank volume ratio of the first aerobic zone to the pre anaerobic and anoxic zone is 2-5:1, the tank volume ratio of the first anoxic zone to the pre anaerobic and anoxic zone is 4-10:1, the tank volume ratio of the second anoxic zone to the pre anaerobic and anoxic zone is 1-2:1, and the tank volume ratio of the post-multifunctional zone to the pre anaerobic and anoxic zone is 1-2:1. The sum of the tank volume of the first anoxic zone, the second anoxic zone, and the third anoxic zone should be at least twice tank volume of the first aerobic zone.

Suspended carriers are added to the first aerobic zone, with a filling rate of ≥ 30%, and the nitrification load borne by the suspended carriers reaches over 50%. The first aerobic zone is provided with a first interception screen and a second interception screen for intercepting the suspended carriers.

b. When the influent C/N of the sewage to be treated is ≥ 5 or C/N is < 2, the system adopts AAO operation mode, and the specific operation method is:
The sewage to be treated and returned sludge enter the first anaerobic zone through the inlet channel, and then pass through the fourth anaerobic zone and the third anaerobic zone in sequence before entering the second anaerobic zone, then flow from the second anaerobic zone into the first anoxic zone, the first aerobic zone, the second anoxic zone, and the third anoxic zone in sequence, and then are discharged through the main outlet pipe connected to the second aerobic zone.

c. When 2 ≤ the influent C/N of the sewage to be treated < 5, the system adopts AOA operation mode, and the specific operation method is:
The sewage to be treated and returned sludge enter the second anaerobic zone through the inlet channel, and then pass through the third anaerobic zone and the fourth anaerobic zone in sequence before entering the first anaerobic zone, then flow from the first anaerobic zone into the first aerobic zone, the first anoxic zone, the second anoxic zone, and the third anoxic zone in sequence, and then are discharged through the main outlet pipe connected to the second aerobic zone.

As a preferred solution of the present disclosure, the pre anaerobic and anoxic zone mentioned above includes a first anaerobic zone, a second anaerobic zone, a third anaerobic zone, and a fourth anaerobic zone arranged in a grid pattern, wherein the fourth anaerobic zone and the first anaerobic zone are in the first row, the third anaerobic zone and the second anaerobic zone are in the second row, the fourth anaerobic zone and the third anaerobic zone are in the first column, and the first anaerobic zone and the second anaerobic zone are in the second column.

As another preferred solution of the present disclosure, the inlet channel is arranged in the pre anaerobic and anoxic zone, and the inlet end of the inlet channel is connected to a sludge reflux pipe.

Further, a first weir plate and a second weir plate are provided on the connecting wall between the first aerobic zone and the first anoxic zone. The first weir plate is located near the second anaerobic zone, and an internal reflux pump is provided near the first weir plate. The second weir plate is located near the second anoxic zone. The height of the total outlet is lower than the adjustable minimum height of the weir plates. By adjusting the height of the first weir plate and the second weir plate mentioned above, the normal flow of water is ensured to prevent backflow.

Preferably, the first aerobic zone, the first anoxic zone, and the second anoxic zone are respectively equipped with a mixer. The mixer located in the first aerobic zone causes the mixed liquid in the first aerobic zone to flow circularly, and on the side close to the pre anaerobic and anoxic zone, the mixed liquid flows from the second anaerobic zone to the first anaerobic zone. The mixer located in the second anoxic zone causes the circulating flow direction of the mixed liquid in the second anoxic zone to be the same as the flow direction of the mixed liquid in the first aerobic zone. The mixer located in the first anoxic zone causes the circulating flow direction of the mixed liquid in the first anoxic zone to be opposite to the flow direction of the mixed liquid in the first aerobic zone. The aforementioned pre anaerobic and anoxic zone and the third anoxic zone are equipped with submersible mixers.

Preferably, the first aerobic zone and the second aerobic zone mentioned above are provided with aeration devices.

Preferably, in step a, the suspension carriers mentioned above are made of high-density polyethylene material, with a density of 0.94-0.97g/cm³, a porosity of ≥ 90%, and a filling rate of ≤ 67%.

Preferably, the first interception screen is located in the lower left corner of the first aerobic zone and close to the second anaerobic zone. The second interception screen is diagonally connected to the first interception screen, and both the first interception screen and second interception screen are connected to the adjacent tank walls of the first aerobic zone.

Preferably, under normal conditions, the DO of the first aerobic zone is controlled at 2-4mg/L. If the ammonia nitrogen in effluent of the system exceeds 70% of the designed ammonia nitrogen for 5 consecutive days, the DO of the first aerobic zone is increased to 4-6 mg/L. When the ammonia nitrogen in the effluent of the system drops to less than 50% of the designed ammonia nitrogen for 5 consecutive days, the DO of the first aerobic zone is restored to 2-4mg/L.

Preferably, when the system selects AAO mode for operation, the sludge retention time of the system is controlled between 30-40 days. When the system selects AOA mode for operation, the sludge retention time is controlled between 15-30 days.

In the above operation method, the first aerobic zone is controlled reasonably through a mixer and aeration to ensure a biofilm thickness within 50-300um.

Compared with the prior technology, the present disclosure brings the following advantageous technical effects:
(1) The nitrification effect is excellent. By adding suspended carriers in the first aerobic zone, a sludge film composite MBBR process is formed. Further, by limiting the nitrification load borne by the biofilms of suspended carriers, the nitrification effect of the system is greatly improved, and the aerobic tank volume is reduced by more than 50% as well. This solves the risk of ammonia nitrogen not meeting the standard in traditional AOA process due to seeking to enhance total nitrogen (TN) removal. The ammonia nitrogen removal rate of the system is > 95%,, it can even achieve ammonia nitrogen in effluent < 1mg/L by optimizing and adjusting.
(2) The nitrification effect is stable. The first aerobic zone forms a circulating flow tank type with the help of a mixer. On the one hand, it achieves efficient fluidization of suspended carriers, and on the other hand, by controlling the thickness of the biofilm, it can ensure that the biofilm consistently maintains an efficient nitrification load. At the same time, with the help of mass and oxygen transfer of biofilm, the treatment load can be increased through DO, and the system can adapt to various water quality fluctuations or changes.
(3) The denitrification effect is cost-effective and stable. By providing a dual mode operation method, the advantages of AOA and AAO processes can be fully utilized when dealing with different influent water quality, so economical and efficient removal of TN under conventional conditions can be ensured. The TN removal rate is > 80%, and a good effect that the effluent TN < 5mg/L can be achieved through process optimization control.
(4) Compared to conventional activated sludge processes, the tank volume of the aerobic zone is reduced by more than 50% without affecting the treatment effect, resulting in a reduction of over 20% in land occupation compared to traditional AAO and AOA processes.
(5) Phosphorus removal effect is good. By setting the pre anaerobic and anoxic zone in a graded manner, the redox potential of the system gradually reduces and the anaerobic environment is increasingly strict, which is facilitated to the anaerobic phosphorus release process, thereby improving the efficiency of biological phosphorus removal.

### BRIEF DESCRIPTION OF DRAWINGS

The following is a further illustration of the present disclosure in conjunction with the accompanying drawings:
FIG. 1 is a schematic diagram of the arrangement of the system required for the MBBR enhanced AOA and AAO dual mode operation method based on circulating flow of the present disclosure;
FIG. 2 and FIG. 3 show the effluent quality of the sewage plant under filling rates of different suspended carriers in the first aerobic zone;
FIG. 4 and FIG. 5 show the effluent quality of the sewage plant under different DO levels in the first aerobic zone;
FIG. 6 shows the arrangement of the integrated sewage treatment device in Embodiment 6; and
FIG. 7 shows the arrangement of each functional zone of the sewage treatment plant in Embodiment 7.

Reference marks in the drawings:
A - pre anaerobic and anoxic zone; 1A - first anaerobic zone, 2A - second anaerobic zone, 3A - third anaerobic zone, 4A - fourth anaerobic zone; O1- first aerobic zone; A1- first anoxic zone; A2- second anoxic zone; B- post-multifunctional zone; A3- third anoxic zone; O2-second aerobic zone; S1- first sluice gate, S2- second sluice gate, S3- third sluice gate, S4-fourth sluice gate, S5- fifth sluice gate, S6- sixth sluice gate, G1- first flow passing channel, G2-second flow passing channel, G3- third flow passing channel, G4- fourth flow passing channel, G5- fifth flow passing channel, G6- sixth flow passing channel, Y1- first weir plate, Y2- second weir plate, H1- first interception screen, H2- second interception screen, C1- inlet channel, P1- internal reflux pump.

### DETAILED DESCRIPTION OF PREFERRED EMBODIMENTS

The present disclosure provides a MBBR enhanced AOA and AAO dual mode operation method based on circulating flow. In order to make the advantages and technical solutions of the present disclosure more clear and definite, a detailed illustration of the present disclosure in conjunction with specific embodiments will provide as follows.

Unless otherwise explicitly stated, in the entire specification and claims, the term "includes" or its transformations such as "including" will be considered as including the stated elements or components, without excluding other elements or other components.

In this article, for the convenience of description, spatial relative terms such as "under", "below", "lower", "above", "on", "upper", etc. can be used to describe the relationship between a component or feature and another component or feature in the accompanying drawings. It should be conprehended that the spatial relative terms is intended to encompass different directions of objects in use or operation, except for the directions depicted in the diagram. For example, if the object in the figure is flipped, the component described as "below" or "under" other component or feature will be oriented "above" the component or feature. Therefore, the exemplary term "below" can include both the lower and upper directions. The component can also have other orientations (rotation of 90 degrees or other orientations) and the spatial relative terms used in this article should be explained accordingly.

Firstly, a detailed explanation of some technical terms involved in the present disclosure is provided.

AOA and AAO dual modes, means that the system controls to change the direction of water flow by controlling the opening and closing of valves between two different tanks, allowing the sewage to be treated to flow through two paths within the system: anaerobic → oxic → anoxic (AOA) mode and anaerobic → anoxic → oxic (AAO) mode.

Design nitrification tank volume, means nitrification tank volume is designed according to the design regulations of the activated sludge method in the *"Standard for design* of *outdoor wastewater engineering",* unit m^{3.}

Design nitrification load, aimed at means activated sludge process, means that under the designed nitrification tank volume conditions, the mass of oxidized ammonia nitrogen per unit volume of the aerobic zone reaction tank per day is the nitrification load, unit kgN/m³/d.

Filling rate, refers to the ratio of the volume of the suspended carriers to the tank volume of the filling area, and the volume of the suspended carriers is the total volume under natural accumulation.

Pre anaerobic and anoxic zone A, where an inlet channel is set up in the pre anaerobic and anoxic zone, preferably with four anaerobic zones. Wherein, the fourth anaerobic zone 4A and the first anaerobic zone 1A are in the first row, the third anaerobic zone 3A and the second anaerobic zone 2A are in the second row, the fourth anaerobic zone and the third anaerobic zone are in the first column, and the first anaerobic zone and the second anaerobic zone are in the second column. Certainly, the present disclosure can separate the pre anaerobic and anoxic zone again according to the actual situation.

The post-multifunctional zone B includes the third anoxic zone A3 and the second aerobic zone O2.

The source of the technical concept of the present disclosure is shown below:
The AOA process adopts an anaerobic → oxic → anoxic process. The anaerobic zone uses activated sludge to absorb the organic matter contained in the influent, synthesizes PHA (internal carbon source), and stores the synthesized PHA in the cells, and phosphorus releases at the same time. The aerobic zone mainly completes the nitrification of ammonia nitrogen, while the anoxic zone utilizes the internal carbon source synthesized by activated sludge in the anaerobic section for denitrification nitrogen removal and denitrification phosphorus removal, achieving dual purposes of nitrogen and phosphorus removal and improving the utilization rate of raw water carbon source. So, the core of AOA process is the setting of aerobic zones, and the tank volume must be small to reduce the loss of internal carbon sources. For example, the aerobic decomposition of internal carbon sources and the aerobic phosphorus uptake of phosphorus accumulating organisms can both cause the loss of internal carbon sources.

The shortcomings of current research are: 1) When the tank volume and the proportion of each functional zone are the same, the treatment effects of AOA and AAO processes have their own advantages and disadvantages. AOA has better TN removal effect and higher carbon source utilization rate of raw water. While the ammonia nitrogen removal effect of AAO is better, of which nitrogen removal relies on reflux, consuming a lot of energy. It is necessary to balance the high-quality operation effect and economic operation. 2) The nitrification effect of AOA process is only borne by activated sludge, and its nitrification efficiency and impact resistance are poor. When there is impact in the influent, the ammonia nitrogen in the effluent is easy exceeding emission standards.

The present disclosure provides a MBBR enhanced AOA and AAO dual mode operation method based on circulating flow, which combines the advantages of the sewage treatment modes in AOA and AAO and rearranges the reaction tank.

Firstly, the division of the pre anaerobic and anoxic zone can achieve stricter anaerobic conditions as the mixed liquid flows, producing better anaerobic phosphorus release effect and strengthening biological phosphorus removal.

Secondly, for AOA mode operation, it is necessary to increase the tank volume ratio of anoxic zone to aerobic zone as much as possible and reduce the tank volume of the aerobic zone, thereby a series of limitations is imposed. Firstly, the method of adding suspended carriers is adopted, and the filling rate of the suspended carriers is set to be ≥ 30% to ensure that the suspended carriers are the main body of nitrification; on the basis of reducing the aerobic tank volume to less than half of the designed nitrification tank volume, the aerobic tank volume is reduced; Setting the filling rate of the suspended carriers not to exceed 67% is to ensure the fluidization effect of the suspended carriers, and the porosity not to be less than 90% is to reduce the occupation of nitrification tank volume due to the addition of the suspended carriers; the first aerobic zone adopts a sludge film composite MBBR system, with a nitrification load of 80-90% of the designed nitrification load. Secondly, the improvement law of DO control on biofilm nitrification performance is studied and obtained, by increasing DO, the nitrification effect can be further improved, and the nitrification effect can continue to be improved without increasing the tank volume.

Finally, by providing dual mode operation, the present disclosure timely converts operation mode according to the advantages of AOA and AAO operation for different influent water quality. On the basis of ensuring nitrification effect, it strengthens the removal of total nitrogen in the most economical way, achieving a balance between effect and economy. Besides, according to the study, the utilization rate of raw water carbon source increases with the increase of sludge retention time (SRT). When operating in AAO mode, by appropriately increasing the SRT of the system, the denitrification effect is ensured on the basis of limited anoxic tank volume, and the removal of total nitrogen is strengthened in the most economical way to achieve a balance between effect and economy.

The above improvement points are closely connected and inseparable, and the nitrification effect of the system is enhanced through the addition of suspended carriers; further enhancing the nitrification potential of suspended carriers through the relationship between DO and the biofilm nitrification performance of suspended carriers. By operating in dual mode, energy conservation and consumption reduction in sewage treatment can be achieved while ensuring treatment efficiency.

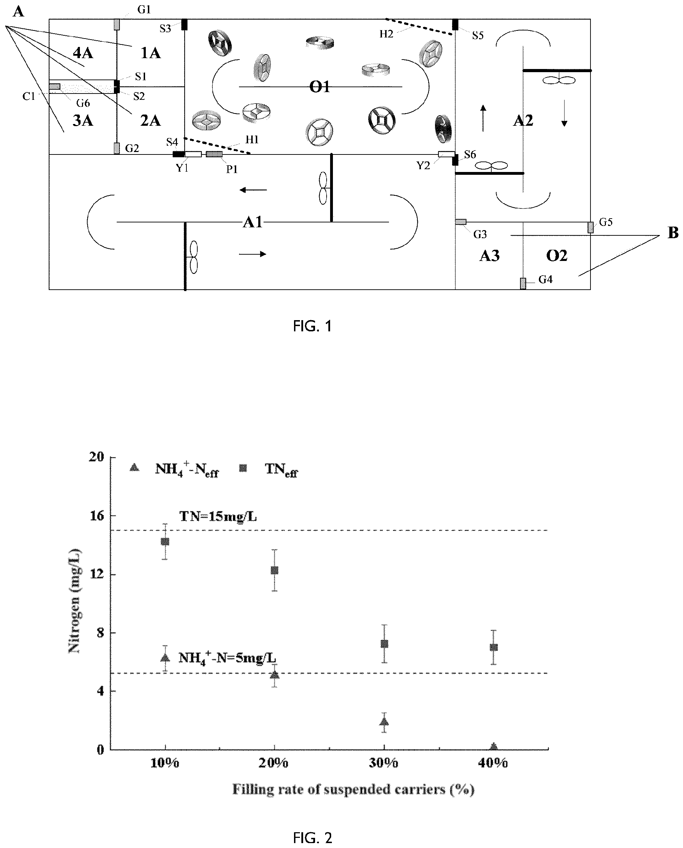

As shown in Figure 1, the system required for MBBR enhanced AOA and AAO dual mode operation method based on circulating flow of the present disclosure includes a reaction tank, relevant sluice gates, and relevant water opening. The reaction tank is generally preferably rectangular, and is divided into two sets of reaction tanks arranged in parallel by a partition wall, namely the first reaction tank and the second reaction tank. The pre anaerobic and anoxic zone A and the first aerobic zone O1 are sequentially arranged from left to right in the first reaction tank. The second reaction tank serves as the first anoxic zone A1, and the third reaction tank is further arranged on the right side of the first and second reaction tanks. The length of the third reaction tank is the sum of the widths of the first and second reaction tanks. The third reaction tank includes the second anoxic zone A2 located at the top and the post-multifunctional zone B located at the bottom, respectively. The post-multifunctional zone includes the third anoxic zone A3 and the second aerobic zone O2, and the second anoxic zone A2 can be interconnected to both the first aerobic zone and first anoxic zone. Multiple operating modes of the above system are achieved by controlling the relevant sluice gates and related flow passing channels.

An inlet channel C1 is arranged in the center of the pre anaerobic and anoxic zone, and the inlet end of the inlet channel is connected to a sludge reflux pipe. The preferred pre anaerobic and anoxic zone of the present disclosure includes a fourth anaerobic zone 4A, a first anaerobic zone 1A, a third anaerobic zone 3A, and a second anaerobic zone 2A arranged in a grid pattern. Wherein, the fourth anaerobic zone and the first anaerobic zone are in the first row, the third anaerobic zone and the second anaerobic zone are in the second row, the fourth anaerobic zone and the third anaerobic zone are in the first column, and the first anaerobic zone and the second anaerobic zone are in the second column. The post-multifunctional zone includes the third anoxic zone and the second aerobic zone, and the treated sewage is discharged from the main outlet pipe connected to the second aerobic zone. The relevant sluice gates are the sluice gate S1, the second sluice gate S2, the third sluice gate S3, the fourth sluice gate S4, the fifth sluice gate S5, and the sixth sluice gate S6. The relevant flow passing channels are the first flow passing channel G1, the second flow passing channel G2, the third flow passing channel G3, the fourth flow passing channel G4, the fifth flow passing channel G5, and the sixth flow passing channel G6.

The first sluice gate and the second sluice gate are arranged on the inlet channel, the third sluice gate is arranged between the first anaerobic zone and the first aerobic zone, the fourth sluice gate is arranged between the second anaerobic zone and the first anoxic zone, the fifth sluice gate is arranged between the first aerobic zone and the second anoxic zone, and the sixth sluice gate is arranged between the second anoxic zone and the first anoxic zone. The first sluice gate is connected to the first anaerobic zone, and the second sluice gate is connected to the second anaerobic zone.

The first flow passing channel G1 is arranged between the first anaerobic zone and the fourth anaerobic zone, the second flow passing channel G2 is arranged between the second anaerobic zone and the third anaerobic zone, the third flow passing channel G3 is arranged between the second anoxic zone and the third anoxic zone, the fourth flow passing channel G4 is arranged between the third anoxic zone and the second aerobic zone, the fifth flow passing channel G5 is arranged on the right side of the second aerobic zone near the second anoxic zone, and the sixth flow passing channel G6 is arranged between the third anaerobic zone and the fourth anaerobic zone.

A first weir plate Y1 and a second weir plate Y2 are provided between the first aerobic zone and the first anoxic zone. An internal reflux pump P1 is arranged near the first weir plate. The specific positions of the first weir plate and the internal reflux pump P1 are located near the second anaerobic zone and at the rear end of the first interception screen. The second weir plate is located on the tank wall near the second anoxic zone.

Suspended carriers is added to the first aerobic zone, and the first interception screen H1 and the second interception screen H2 are arranged. The first interception screen is located in the lower left corner of the first aerobic zone and is close to the second anaerobic zone. The second interception screen is diagonally connected to the first interception screen, and both the first interception screen and the second interception screen are connected to the adjacent tank walls of the first aerobic zone.

The first aerobic zone, the first anoxic zone, and the second anoxic zone are respectively equipped with a mixer. The mixer located in the first aerobic zone causes the mixed liquid in the first aerobic zone to flow circularly, and on the side close to the pre anaerobic and anoxic zone, the mixed liquid flows from the second anaerobic zone to the first anaerobic zone. The mixer located in the second anoxic zone causes the circulating flow direction of the mixed liquid in the second anoxic zone to be the same as the flow direction of the mixed liquid in the first aerobic zone. The mixer located in the first anoxic zone causes the circulating flow direction of the mixed liquid in the first anoxic zone to be opposite to the flow direction of the mixed liquid in the first aerobic zone. The aforementioned pre anaerobic and anoxic zone and the third anoxic zone are equipped with submersible mixers. The first aerobic zone and the second aerobic zone mentioned above are provided with aeration devices.

Preferably, the heights of the lower edges of the fifth sluice gate, the sixth sluice gate, the third flow passing channel, and the fourth flow passing channel are not higher than that of the fifth flow passing channel. Both the first weir plate and the second weir plate are adjustable weir plates, the highest height of adjustable weir plates is flush with the water area wall, and the lowest height of adjustable weir plates is 0.5-1.0m higher than the lower edge of the fifth flow passing channel. The suspension carrier should be made of high-density polyethylene material, with a filling rate of ≥ 30%. The nitrification load borne by the suspension carrier should reach over 50%, and the density of the suspension carrier should be 0.94-0.97g/cm³. The division ratio of each zone in the reaction tank is as follows: the first aerobic zone is designed according to 30-40% of the designed nitrification tank volume, the tank volume ratio of the first aerobic zone to the pre anaerobic and anoxic zone is 2-5:1, the tank volume ratio of the first anoxic zone to the pre anaerobic and anoxic zone is 5-7:1, the tank volume ratio of the second anoxic zone to the pre anaerobic and anoxic zone is 1-2:1, and the tank volume ratio of the post-multifunctional zone to the pre anaerobic and anoxic zone is 1-2:1;

The operating modes are described in detail below in conjunction with the reaction system described above.

Specifically, there are two operating modes:
1) AAO operation mode: Opening the first sluice gate and closing the second sluice gate, sewage and returned sludge enter the first anaerobic zone together from the inlet channel; closing the third sluice gate, through the first flow passing channel, the sixth flow passing channel, and the second flow passing channel, the sewage and returned sludge pass through the fourth anaerobic zone and the third anaerobic zone in sequence to enter the second anaerobic zone; opening the fourth sluice gate, then the sewage and returned sludge enter the first anoxic zone; then adjusting the first weir plate to its highest position, adjusting the second weir plate to the lowest position while opening the internal reflux pump and closing the sixth sluice gate, sewage overflows through the second weir plate to the first aerobic zone, enters into the second anoxic zone through the second interception screen and the fifth sluice gate, then enters into the third anoxic zone through the third flow passing channel, then enters into the second aerobic zone through the fourth flow passing channel, and then enters the next control unit through the fifth flow passing channel.
2) AOA operation mode: Opening the second sluice gate, closing the first sluice gate, sewage and returned sludge enter the second anaerobic zone from the inlet channel; closing the fourth sluice gate, through the second flow passing channel, the sixth flow passing channel, and the first flow passing channel, the sewage and returned sludge pass through the third anaerobic zone and the fourth anaerobic zone in sequence to enter the first anaerobic zone; opening the third sluice gate, then the sewage and returned sludge enter the first aerobic zone; closing the fifth sluice gate, adjusting the first weir plate to its lowest position, adjusting the second weir plate to its highest position while shutting down the internal reflux pump, the sewage passes through the first interception screen and the first weir plate, enters the first anoxic zone; opening the sixth sluice gate, the sewage enters the second anoxic zone, then passes through the third flow passing channel to enter into the third anoxic zone, then passes through the fourth flow passing channel to enter into the second aerobic zone, and then enters the next control unit through the fifth flow passing channel.

The following will further illustrate the present disclosure in conjunction with the proportion and specific embodiments.

### Contrast Example 1:

### Applying a single AOA mode:

There are two sets of integrated sewage treatment units, numbered 1-2, both of which are MBBR enhanced AOA and AAO dual mode systems based on circulating flow. The total effective tank volume of the units is 25.31m³, with a designed daily treatment capacity of 37.5m³/d. The effective tank volumes of the pre anaerobic and anoxic zone, the first aerobic zone, the first anoxic zone, the second anoxic zone, and the post-multifunctional zone of the two sets of units are 1.054m³, 3.162m³, 6.324m³, 1.054m³, and 1.054m³, respectively. The tank volume ratio of the first aerobic zone to the pre anaerobic and anoxic zone is 3:1, the tank volume ratio of the first anoxic zone to the pre anaerobic and anoxic zone is 6:1, the tank volume ratio of the second anoxic zone to the pre anaerobic and anoxic zone is 1:1, the tank volume ratio of the post-multifunctional zone to the pre anaerobic and anoxic zone is 1:1, and the sum of the tank volumes of the first anoxic zone, the second anoxic zone, and the third anoxic zone is 2.55 times the tank volume of the first aerobic zone. Suspended carriers are added at a filling rate of 40% in the first aerobic zone. Both systems operate in AOA and AAO modes under high and low influent C/N conditions, respectively. The DO in the aerobic zone is controlled between 2.5-3.0mg/L, and no external organic carbon source is added. The actual effluent quality under high influent C/N is shown in Table 1, while the actual effluent quality under low influent C/N is shown in Table 2.

**Table 1: Actual influent and effluent quality under AOA and AAO modes when influent C/N is high (mg/L)**

| | Ammonia nitrogen | TN | COD | TP |
|---|---|---|---|---|
| Influent | 48.22 | 58.24 | 353.54 | 4.22 |
| Effluent of AOA mode | 3.22 | 7.34 | 27.25 | 0.32 |
| Effluent of AAO mode | 0.55 | 8.22 | 24.26 | 0.38 |

**Table 2: Actual influent and effluent quality under AOA and AAO modes when influent C/N is low (mg/L)**

| | Ammonia nitrogen | TN | COD | TP |
|---|---|---|---|---|
| Influent | 35.22 | 39.78 | 146.27 | 3.11 |
| Effluent pf AOA mode | 0.87 | 4.87 | 22.36 | 0.21 |
| Effluent ofAAO mode | 0.43 | 12.59 | 23.27 | 0.29 |

The operation results show that the AOA process has a higher removal effect on TN, especially under low C/N conditions. Due to the high utilization rate of raw water carbon source, the AOA process has a more obvious advantage in TN removal, while the AAO process has a better effect on ammonia nitrogen removal, especially under high C/N conditions. Due to the fact that, by setting the anoxic zone in the front, it can counteract the inhibition of influent COD on nitrification load, the nitrification advantage is more obvious. In summary, the AAO and AOA processes have their own advantages and disadvantages in dealing with different influent water qualities. Therefore, the process flow should be reasonably selected based on the characteristics of influent water quality.

### Embodiment 1:

There are 4 sets of integrated sewage treatment units, numbered 1-4, all of which are MBBR enhanced AOA and AAO dual mode systems based on circulating flow, with a designed daily treatment capacity of 37.5m³/d. The effective tank volumes of the pre anaerobic and anoxic zone, the first anoxic zone, the second anoxic zone, and the post-multifunctional zone of the four sets of devices are 1.054m³, 6.324m³, 1.054m³, and 1.054m³, respectively. The tank volumes of the first aerobic zone are designed according to 20%, 30%, 40%, and 50% of the designed nitrification tank volume, which are 1.04m³, 1.581m³, 2.108m³, and 2.635m³ respectively, labeled as 1 # - 4 # reactors. Suspended carriers are added at a filling rate of 40% in the first aerobic zone. The system operates in AOA mode, with an average DO control of 2.5-3.0mg/L in the aerobic zone. The actual effluent quality is shown in Table 3.

**Table 3 System effluent quality under different tank volumes of first aerobic zones (mg/L)**

| | Ammonia nitrogen | TN | COD | TP |
|---|---|---|---|---|
| Influent | 35.22 | 39.78 | 146.27 | 3.11 |
| Effluent of 1# reactor | 7.14 | 12.69 | 34.26 | 0.33 |
| Effluent of 2# reactor | 3.36 | 9.57 | 30.22 | 0.35 |
| Effluent of 3# reactor | 1.22 | 8.22 | 27.36 | 0.24 |
| Effluent of 4# reactor | 0.85 | 16.26 | 28.26 | 0.56 |

The operation results show that when the tank volume of the first aerobic zone is designed according to 20% of the designed nitrification tank volume, the nitrification effect of the system cannot be guaranteed, and the ammonia nitrogen of the effluent exceeds the standard. When the tank volume of the first aerobic zone is designed according to 30% to 40% of the designed nitrification tank volume, the nitrification effect of the system can be guaranteed, and the ammonia nitrogen of the effluent can reach the first level A standard, and the ammonia nitrogen and TN in the effluent can be further reduced with the increase of filling rate. When the tank volume of the first aerobic zone reaches 50% of the designed nitrification tank volume, the carbon loss in the aerobic zone is too high, leading to a deterioration of the denitrification effect in the anoxic zone and a significant increase in effluent TN. It can be seen that when suspended carriers are added to the first aerobic zone to form a sludge film composite MBBR system, the tank volume can be designed according to 30-40% of the designed nitrification tank volume, which can ensure nitrification efficiency and save land to a certain extent.

### Embodiment 2:

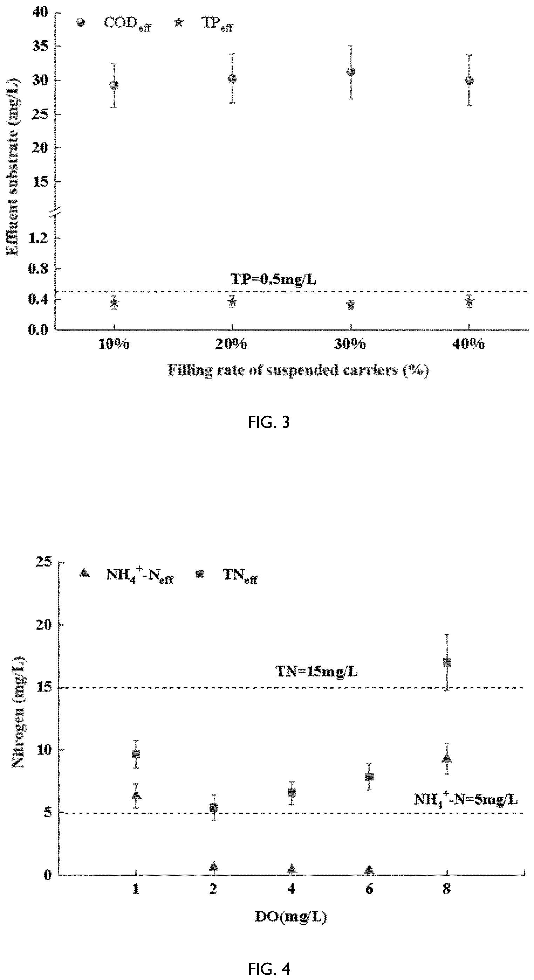

There are four sets of sewage treatment plants, numbered A, B, C, D, with a designed daily treatment capacity of 30m³/d, adopting AOA related process flow in the biochemical section, and the effluent complies with the first level A standard. The total tank volume of the biochemical tank is 19.5m³, among which the tank volume of different functional zones of each device is shown in Table 4. The aerobic zone of A-D device is added with suspended carriers according to the filling rate of 10%, 20%, 30%, and 40%, respectively. Each device uses the same influent and operates in AOA mode, with DO controlled between 5.0 and 6.0mg/L in the aerobic zone. The actual influent and effluent quality are shown in Table 5, Figure 2, and Figure 3 respectively.

**Table 4 Tank volume of each functional zone of device A-D (m³)**

| Functional zone | Anaerobic tank | Aerobic tank | Anoxic tank |
|---|---|---|---|
| Effective tank volume | 1.0 | 6.0 | 12.5 |

**Table 5 Actual influent quality of sewage treatment plant (mg/L)**

| Ammonia nitrogen | TN | COD | TP |
|---|---|---|---|
| 27.22 | 34.52 | 167.56 | 3.88 |

When the filling rate of suspended carriers in the aerobic zone is 10% and 20%, the nitrification effect of the system cannot be fully guaranteed under high DO. However, when the filling rate of suspended carriers is increased to 30% and 40%, the improvement of nitrification effect in the system can fully ensure that the effluent water quality meets the standard under high DO. Moreover, the improvement of nitrification effect mainly comes from the biofilm of suspended carriers, which does not affect the loss of internal carbon source in activated sludge, leading to a significant correlation between the TN content in the effluent of various systems and the ammonia nitrogen content in the effluent. With a 30% and 40% filling rate of suspended carriers, the TN content in the effluent can also reach stable standards. It can be seen that for the addition of suspended carriers in the first aerobic zone, in order to fully reflect the improvement effect of suspended carriers on nitrification effect and facilitate the control of nitrification effect through high DO, the filling rate of suspended carriers in the first aerobic zone should be ensured to be ≥ 30%. At this point, the suspended carriers can bear the main nitrification effect, ensuring the ammonia nitrogen and TN in effluent meet the standard without affecting the carbon loss of activated sludge.

### Embodiment 3:

For the sewage treatment plant in Contrast Example 1, different influent qualities are used, and the effluent water quality under AOA and AAO processes is compared. The actual influent and effluent effects are shown in Table 6.

**Table 6 Actual influent and effluent quality under AOA and AAO modes under different influent C/N**

| | Ammonia nitrogen | TN | Influent C/N | COD |
|---|---|---|---|---|
| Influent | 19.56 | 21.23 | 1.90 | 40.29 |
| Effluent in AOA mode | 0.46 | 13.02 | / | 19.20 |
| Effluent in AAO mode | 0.18 | 13.11 | / | 18.22 |
| Influent | 22.58 | 29.26 | 2.54 | 74.33 |
| Effluent in AOA mode | 0.97 | 4.22 | / | 24.26 |
| Effluent in AAO mode | 0.62 | 13.68 | / | 22.11 |
| Influent | 35.22 | 39.78 | 3.68 | 146.27 |
| Effluent in AOA mode | 0.87 | 4.87 | / | 22.36 |
| Effluent in AAO mode | 0.43 | 12.59 | / | 23.27 |
| Influent | 46.22 | 52.26 | 4.39 | 229.42 |
| Effluent in AOA mode | 0.86 | 6.27 | / | 29.24 |
| Effluent in AAO mode | 0.29 | 13.46 | / | 26.33 |
| Influent | 48.22 | 58.24 | 6.07 | 353.54 |
| Effluent in AOA mode | 5.22 | 7.34 | / | 27.25 |
| Effluent in AAO mode | 0.85 | 8.22 | / | 24.26 |

The operation effect shows that when the influent C/N is 2.54, 3.68, and 4.39, the AOA process has a better utilization rate of raw water carbon source, so its effluent TN is significantly lower than the AAO process, which can reach below 10mg/L. When the influent C/N is 1.90, the influent carbon source is too low, and even for the AOA process, it cannot be guaranteed that the effluent TN will continue to be below 10mg/L. The effluent TN of the two processes is similar, but the AAO process has better nitrification effect, and the ammonia nitrogen in effluent is significantly lower than that of the AOA process. When the influent C/N is 6.07, for AAO and AOA, the influent carbon source is relatively sufficient, and the difference in TN between the two effluents is not significant, and both can meet the requirement of less than 10mg/L. However, the AOA process is more affected by the organic load of the influent, resulting in excessive ammonia nitrogen in the effluent, while the AAO process continues to ensure that the ammonia nitrogen in the effluent is below 1mg/L. In summary, when C/N ≥ 5 or C/N<2, the AAO process can achieve better ammonia nitrogen removal efficiency. When 2 ≤ the influent C/N of the sewage to be treated < 5, the AOA operation mode can achieve better TN removal efficiency.

### Embodiment 4:

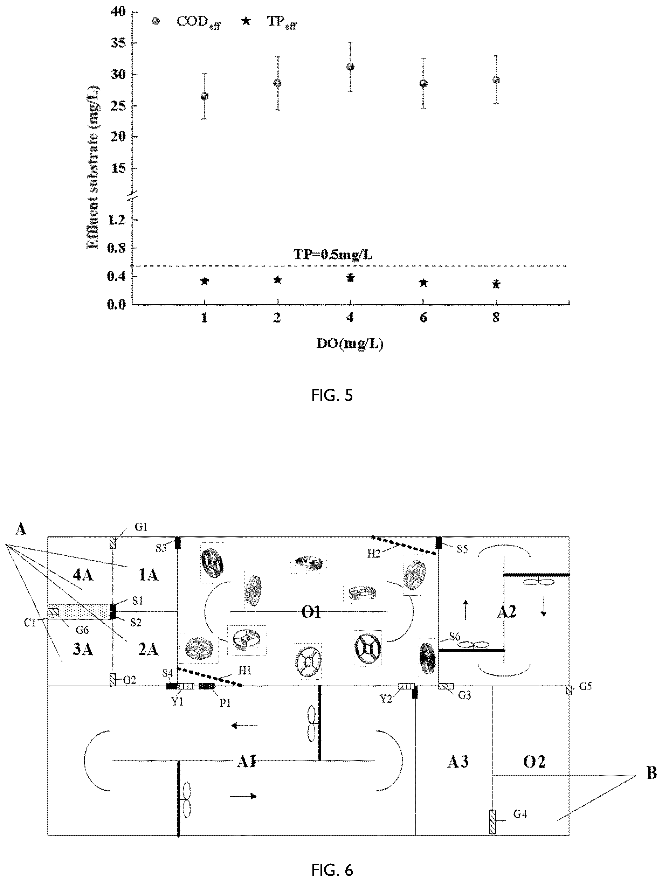

There is a sewage treatment plant, the biochemical section of which adopts an AOA sewage biochemical system, with a designed daily treatment capacity of 75m³/d, and the system effluent complies with the first level A standard. The total tank volume of the biochemical tank in the system is 36.86m³, and the tank volume of each functional zone is shown in Table 7. Wherein, suspended carriers are added to the aerobic zone according to a filling rate of 50%. The ammonia nitrogen concentrations in the influent during different stages of operation are 24.26, 33.77, 41.25, 52.62, and 65.33mg/L, respectively. The DO in the first aerobic zone operates at 1, 2, 4, 6, and 8mg/L, respectively. The actual influent and effluent quality is shown in Figures 4 and 5.

**Table 7 Tank volume of each functional zone of the biochemical tank in the sewage plant (m³)**

| Functional zone | Anaerobic tank | Aerobic tank | Anoxic tank |
|---|---|---|---|
| biochemical tank | 2.20 | 9.92 | 24.74 |

When the DO of the first aerobic zone is 1mg/L, the nitrification effect of the system is poor, resulting in excessive ammonia nitrogen in the effluent. After gradually increasing the DO to 6mg/L, the ammonia nitrogen in the effluent of the system gradually decreases, which is better than the design effluent standard. At the same time, the TN in the effluent of the system gradually increases, but does not exceed the design value. When the system DO further increased to 8mg/L, there is no further decrease in ammonia nitrogen in the effluent, and due to the loss of carbon source in the activated sludge in the first aerobic zone, the effluent TN exceeded the standard. It can be seen that the addition of suspended carriers in the first aerobic zone of the system constitutes a sludge film composite MBBR system, resulting in a significant impact on its nitrification effect by DO. Under normal conditions in the first aerobic zone, on the basis of sufficient influent substrate, the operating DO gradually increases from 1mg/L to 2mg/L, 4mg/L, 6mg/L, and 8mg/L, respectively, which can increase the nitrification load by about 84.72%, 127.83%, 191.47%, and 212.66%. It can be seen that when the DO exceeds 6mg/L, the increase in nitrification load is basically no longer increasing. Therefore, in order to improve the nitrification effect, the maximum DO in the first aerobic zone should not exceed 6mg/L. If DO is continued to be increased, the nitrification effect will not only fail to improve, but also cause excessive carbon source loss in the activated sludge, resulting in excessive TN in the effluent.

### Embodiment 5:

There is a certain sewage treatment plant, which adopts an AAO system in the biochemical section, with a designed daily treatment capacity of 80000 m³/d, and the effluent complies with the first level A standard. The designed influent and effluent quality of the sewage plant is shown in Table 8. The total tank volume of the biochemical tank is 55000m³, and the tank volume of +each functional tank is shown in Table 9. Wherein, suspended carriers are added in the aerobic zone according to a filling rate of 40%. On the basis of little change in the influent substrate and water temperature during the high-temperature season, the average SRT of activated sludge in the system during operation is adjusted to 20d, 30d, 40d, and 50d, respectively. The quality of the influent and effluent of the system is shown in Table 10.

**Table 8 Design influent and effluent quality of sewage treatment plant (mg/L)**

| | COD | NH₄⁺-N | TN |
|---|---|---|---|
| designed influent | 600 | 40 | 60 |
| designed effluent | 50 | 5 (8) | 15 |

**Table 9 Tank volume of each functional zone of the biochemical tank in the sewage treatment plant**

| Functional zone | Anaerobic tank | Aerobic tank | Anoxic tank |
|---|---|---|---|
| biochemical tank | 3333 | 16667 | 35000 |

When the SRT of the system is 20 days, the sludge discharge amount is large, the sludge concentration in the system is relatively low, and the internal carbon source storage is insufficient, resulting in a high TN in the effluent. When the SRT is 30-40 days, the ammonia nitrogen and TN in the effluent are relatively stable and significantly better than the design effluent standard. When the SRT further increases to 50 days, with the decrease of sludge discharge, the sludge concentration in the system is too high, which may lead to hydrolysis phenomenon, resulting in a worse carbon and nitrogen removal effect than when the SRT is 20-30 days. Moreover, it is apparent that the sludge is floating and difficult to settle. Therefore, based on the relationship between the denitrification effect of the comprehensive system and the SRT, the optimal SRT of the AAO process system is easily controlled within 30-40 days. At this period, the activated sludge completely absorbs COD in the raw water, and the synthesized internal carbon source is abundant, ensuring the TN removal effect.

**Table 10 Quality of influent and effluent from the biochemical section of the sewage treatment plant under different SRTs (mg/L)**

| | Ammonia nitrogen | TN | COD | TP |
|---|---|---|---|---|
| Influent | 24.35 | 33.78 | 192.25 | 2.07 |
| Effluent after 20 days of SRT | 0.87 | 14.36 | 27.22 | 0.42 |
| Effluent after 30 days of SRT | 0.43 | 10.03 | 23.26 | 0.31 |
| Effluent after 40 days of SRT | 0.33 | 7.85 | 23.24 | 0.34 |
| Effluent after 50 days of SRT | 0.56 | 10.26 | 28.26 | 0.41 |

### Embodiment 6:

There is a certain sewage treatment integrated device with a designed treatment capacity of 150m³/d, and the effluent meets the class IV water standard. The biochemical section adopts a MBBR enhanced AOA and AAO dual mode system based on circulating flow, with each functional zone arranged as shown in Figure 6, so that the width of the second anoxic area is less than the post-multifunctional zone. The tank volume of the pre anaerobic and anoxic zone is 6.25m³. The first aerobic zone is designed according to 50% of the designed nitrification tank volume, with the tank volume is 13.5m³, and suspended carriers are added at a 50% filling rate in the first aerobic zone. The tank volume of the first anoxic zone, the second anoxic zone, and the post-multifunctional zone are 25m³, 6.25m³, and 9.38m³, respectively. The tank volume ratio of the first aerobic zone to the pre anaerobic and anoxic zone is 2:1, the tank volume ratio of the first anoxic zone to the pre anaerobic and anoxic zone is 4:1, the tank volume ratio of the second anoxic zone to the pre anaerobic and anoxic zone is 1:1, and the tank volume ratio of the post-multifunctional zone to the pre anaerobic and anoxic zone is 1.5:1. The sum of the tank volume of the first anoxic zone, the second anoxic zone, and the third anoxic zone is 2.26 times that of the first aerobic zone.

The actual influent and effluent quality of the sewage treatment device is shown in Table 11. The biochemical section adopts an aerobic adjustable land-saving AOA and AAO dual mode sewage biochemical system and arrangement method. Combined with the correct operation mode, the actual effluent stability is better than the design standard, with ammonia nitrogen and TN lower than 1mg/L and 10mg/L, respectively.

**Table 11 Actual quality of influent and effluent of a sewage plant (mg/L)**

| | Ammonia nitrogen | TN | COD | TP |
|---|---|---|---|---|
| influent quality | 35.26±11.22 | 45.37±14.28 | 251.23±39.22 | 4.28±1.22 |
| effluent quality | 0.79±0.11 | 7.26±1.59 | 29.25±4.33 | 0.35±0.11 |

### Embodiment 7:

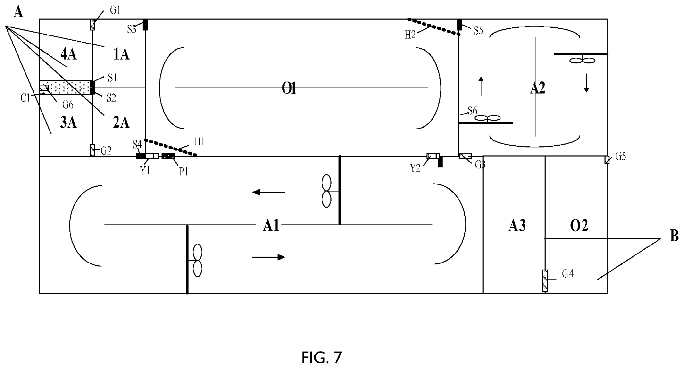

There is a certain sewage treatment plant with a designed treatment capacity of 30000m³/d, and the effluent meets the first level A standard. The biochemical section adopts a MBBR enhanced AOA and AAO dual mode system based on circulating flow, with each functional zone arranged as shown in Figure 7, so that the width of the second anoxic zone is greater than that of the post-multifunctional zone. The tank volume of the pre anaerobic and anoxic zone is 1250m³. The first aerobic zone is designed according to 50% of the designed nitrification tank volume, with the tank volume of 4000m³, and suspended carriers are added at a 50% filling rate in the first aerobic zone. The first anoxic zone, the second anoxic zone, and the post-multifunctional zone have a tank volume of 6875m³, 1875m³ and 1250m³, respectively. In the post-multifunctional zone, the third anoxic zone has a tank volume of 625m³. The tank volume ratio of the first aerobic zone to the pre anaerobic and anoxic zone is 3.2:1, the tank volume ratio of the first anoxic zone to the pre anaerobic and anoxic zone is 5.5:1, the tank volume ratio of the second anoxic zone to the pre anaerobic and anoxic zone is 1.5:1, and the tank volume ratio of the post-multifunctional zone to the pre anaerobic and anoxic zone is 1:1. The sum of the tank volume of the first anoxic zone, the second anoxic zone, and the third anoxic zone is 2.34 times that of the first aerobic zone.

The actual influent and effluent quality of the sewage plant is shown in Table 12. The biochemical section adopts an aerobic adjustable land-saving AOA and AAO dual mode sewage biochemical system and arrangement method. Combined with the correct operation mode, the actual effluent stability is better than the design standard, with ammonia nitrogen and TN lower than 1mg/L and 10mg/L, respectively.

**Table 12 Actual quality of influent and effluent of a sewage plant (mg/L)**

| | Ammonia nitrogen | TN | COD | TP |
|---|---|---|---|---|
| influent quality | 42.36±10.55 | 57.26±15.52 | 299.26±64.66 | 4.23±1.22 |
| effluent quality | 0.77±0.19 | 9.01±0.81 | 27.54±3.78 | 0.33±0.09 |

In summary, the dual mode operation method of the present disclosure can achieve efficient, stable, and economical denitrification.

The parts not mentioned in the present disclosure can be achieved by adopting or drawing on existing technologies.

Although terms such as pre anaerobic and anoxic zone A, first anoxic zone A1, and second anoxic zone A2 are frequently used in this article, the possibility of using other terms is not ruled out. The use of these terms is only for the purpose of more convenient description and explanation of the essence of the present disclosure, interpreting them as any additional limitation is contrary to the spirit of the present disclosure.

It should be further explained that the specific embodiments described above are only examples of the guiding principles from the present invention. Those skilled in the art of the present invention can make various modifications or supplements to the described specific embodiments or adopt approximate methods to replace them, without departing from the spirit of the present invention or go beyond the scope defined by the claims herein.

## Claims

1. **A MBBR** enhanced AOA and AAO dual mode operation method based on circulating flow, comprising the following steps:
A, build an operating system,
the operating system includes a reaction tank, which is separated by a partition wall into two sets of reaction tanks arranged in parallel, namely the first reaction tank and the second reaction tank. In the first reaction tank, a pre anaerobic and anoxic zone and a first aerobic zone are sequentially arranged, and the second reaction tank serves as the first anoxic zone, a third reaction tank is further arranged on the right side of the first and second reaction tanks,
and the length of the third reaction tank is the sum of the widths of the first reaction tank and the second reaction tank, the third reaction tank includes a second anoxic zone located at the top and a post-multifunctional zone located at the bottom, respectively, the post-multifunctional zone includes a third anoxic zone and a second aerobic zone, and the second anoxic zone can be interconnected to both the first aerobic zone and first anoxic zone;
the first aerobic zone is designed according to 30-40% of the designed nitrification tank volume, the tank volume ratio of the first aerobic zone to the pre anaerobic and anoxic zone is 2-5:1, the tank volume ratio of the first anoxic zone to the pre anaerobic and anoxic zone is 4-10:1, the tank volume ratio of the second anoxic zone to the pre anaerobic and anoxic zone is 1-2:1, and the tank volume ratio of the post-multifunctional zone to the pre anaerobic and anoxic zone is 1-2:1, the sum of the tank volume of the first anoxic zone, the second anoxic zone, and the third anoxic zone should be at least twice tank volume of the first aerobic zone;
suspended carriers are added to the first aerobic zone, with a filling rate of ≥ 30%, and the nitrification load borne by the suspended carriers reaches over 50%, the first aerobic zone is provided with a first interception screen and a second interception screen for intercepting the suspended carriers.
B, when the influent C/N of the sewage to be treated is ≥ 5 or C/N is < 2, the system adopts AAO operation mode, and the specific operation method is:
the sewage to be treated and returned sludge enter the first anaerobic zone through the inlet channel, and then pass through the fourth anaerobic zone and the third anaerobic zone in sequence before entering the second anaerobic zone, then flow from the second anaerobic zone into the first anoxic zone, the first aerobic zone, the second anoxic zone, and the third anoxic zone in sequence, and then are discharged through the main outlet pipe connected to the second aerobic zone.
C, when 2 ≤ the influent C/N of the sewage to be treated < 5, the system adopts AOA operation mode, and the specific operation method is:
the sewage to be treated and returned sludge enter the second anaerobic zone through the inlet channel, and then pass through the third anaerobic zone and the fourth anaerobic zone in sequence before entering the first anaerobic zone, then flow from the first anaerobic zone into the first aerobic zone, the first anoxic zone, the second anoxic zone, and the third anoxic zone in sequence, and then are discharged through the main outlet pipe connected to the second aerobic zone.

2. The MBBR enhanced AOA and AAO dual mode operation method based on circulating flow according to claim 1, wherein the pre anaerobic and anoxic zone mentioned above includes the first anaerobic zone, the second anaerobic zone, the third anaerobic zone, and the fourth anaerobic zone arranged in a grid pattern, wherein the fourth anaerobic zone and the first anaerobic zone are in the first row, the third anaerobic zone and the second anaerobic zone are in the second row, the fourth anaerobic zone and the third anaerobic zone are in the first column, and the first anaerobic zone and the second anaerobic zone are in the second column.

3. The MBBR enhanced AOA and AAO dual mode operation method based on circulating flow according to claim 2, wherein the inlet channel is arranged in the pre anaerobic and anoxic zone, and the inlet end of the inlet channel is connected to a sludge reflux pipe.

4. The MBBR enhanced AOA and AAO dual mode operation method based on circulating flow according to claim 1, wherein a first weir plate and a second weir plate are provided on the connecting wall between the first aerobic zone and the first anoxic zone, the first weir plate is located near the second anaerobic zone, and an internal reflux pump is provided near the first weir plate, the second weir plate is located near the second anoxic zone, the height of the total outlet is lower than the adjustable minimum height of the weir plates, by adjusting the height of the first weir plate and the second weir plate mentioned above, the normal flow of water is ensured.

5. The MBBR enhanced AOA and AAO dual mode operation method based on circulating flow according to claim 1, wherein the the first aerobic zone, the first anoxic zone, and the second anoxic zone are respectively equipped with a mixer, the mixer located in the first aerobic zone causes the mixed liquid in the first aerobic zone to flow circularly, and on the side close to the pre anaerobic and anoxic zone, the mixed liquid flows from the second anaerobic zone to the first anaerobic zone, the mixer located in the second anoxic zone causes the circulating flow direction of the mixed liquid in the second anoxic zone to be the same as the flow direction of the mixed liquid in the first aerobic zone, the mixer located in the first anoxic zone causes the circulating flow direction of the mixed liquid in the first anoxic zone to be opposite to the flow direction of the mixed liquid in the first aerobic zone, the aforementioned pre anaerobic and anoxic zone and the third anoxic zone are equipped with submersible mixers.

6. The MBBR enhanced AOA and AAO dual mode operation method based on circulating flow according to claim 1, wherein the first aerobic zone and the second aerobic zone mentioned above are provided with aeration devices.

7. The MBBR enhanced AOA and AAO dual mode operation method based on circulating flow according to claim 4, wherein in step a, the suspension carriers mentioned above are made of high-density polyethylene material, with a density of 0.94-0.97g/cm³, a porosity of ≥ 90%, and a filling rate of ≤ 67%.

8. The MBBR enhanced AOA and AAO dual mode operation method based on circulating flow according to claim 4, wherein the first interception screen is located in the lower left corner of the first aerobic zone and close to the second anaerobic zone, the second interception screen is diagonally connected to the first interception screen, and both the first interception screen and second interception screen are connected to the adjacent tank walls of the first aerobic zone.

9. The MBBR enhanced AOA and AAO dual mode operation method based on circulating flow according to claim 1, **characterized in that** under normal conditions, the DO of the first aerobic zone is controlled at 2-4mg/L, if the ammonia nitrogen in effluent of the system exceeds 70% of the designed ammonia nitrogen for 5 consecutive days, the DO of the first aerobic zone is increased to 4-6 mg/L, when the ammonia nitrogen in the effluent of the system drops to less than 50% of the designed ammonia nitrogen for 5 consecutive days, the DO of the first aerobic zone is restored to 2-4mg/L.

10. The MBBR enhanced AOA and AAO dual mode operation method based on circulating flow according to claim 1, **characterized in that** when the system selects AAO mode for operation, the sludge retention time of the system is controlled between 30-40 days, when the system selects AOA mode for operation, the sludge retention time is controlled between 15-30 days.
